Europäisches Patentamt

European Patent Office

Office européen des brevets

(19)

(11) Numéro de publication: **0 081 413**
**B1**

(12)

# FASCICULE DE BREVET EUROPEEN

(45) Date de publication du fascicule du brevet:
05.02.86

(51) Int. Cl.⁴: **H 04 N 5/38**

(21) Numéro de dépôt: **82402160.4**

(22) Date de dépôt: **26.11.82**

(54) **Equipement de retransmission de signal de télévision en voie commune, à commande automatique du rapport image-son.**

(30) Priorité: **07.12.81 FR 8122854**

(43) Date de publication de la demande:
**15.06.83 Bulletin 83/24**

(45) Mention de la délivrance du brevet:
**05.02.86 Bulletin 86/6**

(84) Etats contractants désignés:
**AT BE CH DE GB IT LI LU NL SE**

(56) Documents cités:
**US - A - 3 955 155**
**US - A - 4 081 839**

**FERNMELDE-PRAXIS, vol. 51, no. 18, 1974, pages 762-767, Berlin (DE); N. VOGT: "Messung der Ausgangsleistung von Fernsehumsetzern"**

(73) Titulaire: **THOMSON-LGT LABORATOIRE GENERAL DES TELECOMMUNICATIONS, 51, boulevard de la République, F-78400 Chatou (FR)**

(72) Inventeur: **Corbel, Jean-Yves, THOMSON-CSF SCPI 173, bld Haussmann, F-75379 Paris Cedex 08 (FR)**

(74) Mandataire: **Turièque, Clotilde et al, THOMSON-CSF SCPI 173, Bld Haussmann, F-75379 Paris Cedex 08 (FR)**

## Description

L'invention se rapporte aux équipernents de retransmission de signaux de télévision en voie commune.

Le rapport entre l'araplitude crête de la composante d'image et l'amplitude crête de la composante de son modulée en fréquence dans un signal composite de télévision est défini au lieu d'émission. Dans les équipements de retransmission, par exemple dans les réémetteurs, transposeurs ou translateurs, il est d'usage d'amplifier simultanément dans une chaîne d'amplification dite 'commune', les composantes image et son du signal de télévision, des boucles de commande automatique du gain des amplificateurs communs agissant simultanément sur les deux composantes.

Un signal de télévision émis dans de bonnes conditions, avec des niveaux nominaux corrects pour les composantes image et son, peut subir des affaiblissements sélectifs en fréquence par suite des phenomènes de propagation; ces affaiblissements sélectifs modifient le rapport image/son dans le signal composite reçu par l'équipement de retransmission.

Du fait que les équiperaents sont linéaires les signaux réémis sont l'image des signaux reçus.

Un équipement de retransmission dans lequel le gain des amplificateurs communs est commandé à partir de l'amplitude crête de la composante image n'affectera pas le rapport image/son qui, si il est anormal à l'entrée, sera retransmis tel quel.

De même, un équipement de retransmission dans lequel le gain des amplificateurs communs est commandé à partir de la somme des amplitudes crêtes des composantes image et son, commandera une modification de gain affectant les deux composantes de la même façon, même lorsque le rapport image/son est anormal du fait de l'atténuation de l'une des composantes, ou maintiendra le gain sans modification si la somme des valeurs crêtes image et son est constante bien que le rapport image/son soit anormal.

Il est connu pour remédier à cet inconvénient de démoduler complètement le signal, de ramener les niveaux des composantes image et son à leurs valeurs nominales, puis de les réémettre dans les mêmes conditions que celles qui ont gouverné leur émission initiale.

Cette procédure est lourde et coûteuse.

Il est également connu, comme indiqué dans l'introduction du brevet américain n° 4 081 839, de séparer les porteuses image et son, en fréquence intermédiaire, et de limiter la porteuse son à un niveau constant, le niveau de la porteuse image étant asservi de manière classique par un circuit de commande automatique de gain. Dans un tel système, il n'y a pas de comparaison des niveaux de porteuse.

La présente invention a pour objet un équipement de retransmission qui resoud ce problème d'une manière plus légère que la démodulation puis la remodulation du signal reçu, et dans lequel une information caractéristique du rapport image et son dans le signal de télévision à réémettre est générée, pour commander un niveau par rapport à l'autre.

Suivant l'invention, un équipement de retransmission de signal de télévision, en voie commune comportant un circuit de commande automatique du rapport des amplitudes crête des composantes image et son du signal de télévision transposé en fréquence intermédiaire, ce circuit comportant deux voies séparées dont les entrées sont couplées aux sorties d'un répartiteur de puissance, l'une de ces voies comportant un circuit de filtrage de la composante d'image et l'autre un circuit de filtrage de la composante de son, l'une de ces voies comportant en outre un amplificateur a gain variable ayant une entrée de commande, et les sorties de ces deux voies étant reliées à un sommateur de sortie, est caractérisé en ce que le circuit de commande automatique du rapport image et son comporte en outre à la sortie de chacune des voies des moyens de prélèvement de signal dont les sorties sont reliées à des détecteurs d'amplitude, les sorties de ces détecteurs étant reliées aux entrées d'un circuit de comparaison générant un signal de commande lorsque le rapport entre les amplitudes image et son détectées s'écarte d'une valeur nominale prédéfinie, la sortie de ce circuit de comparaison étant couplée à l'entrée de commande de gain de l'amplificateur à gain variable.

L'invention sera mieux comprise et d'autres caractéristiques apparaîtront à l'aide de la description qui suit en référence aux figures annexées.
- La figure 1 est un schéma synoptique de l'équipement de retransmission suivant l'invention;
- la figure 2 est un schéma synoptique du circuit de commande automatique du rapport image/son de l'équipement.

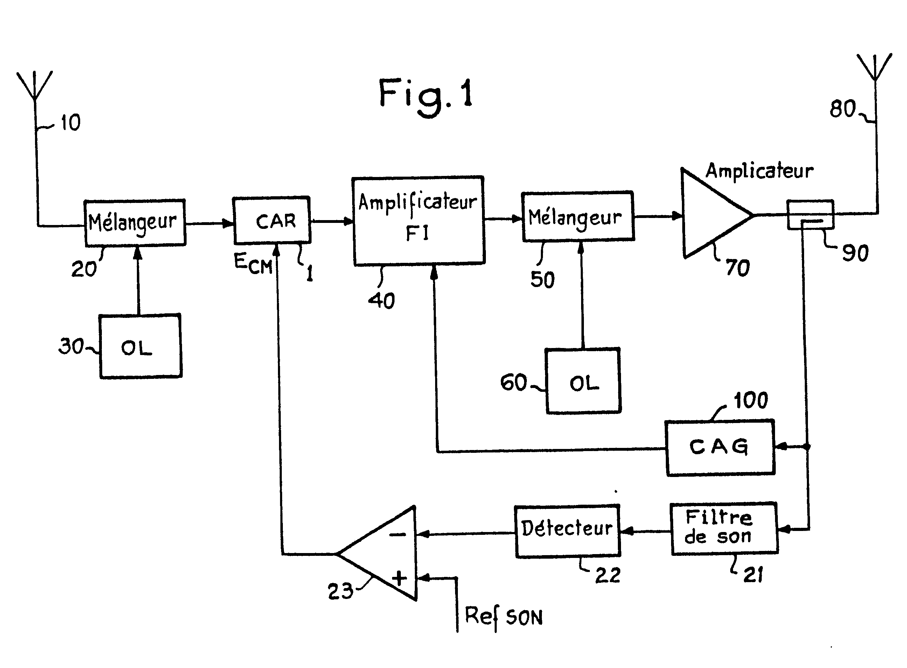

La figure 1 représente un équipement de retransmission d'un signal de télévision en voie commune suivant l'invention qui comporte les éléments classiques d'une chaîne d'amplification en voie commune et des éléments supplémentaires.

Classiquement, un réémetteur de télévision à amplification commune du son et de l'image comporte une antenne de réception, 10, un mélangeur 20 ayant une entrée reliée à l'antenne et une entrée reliée à la sortie d'un oscillateur local 30, pour transposer le signal reçu en fréquence intermédiaire. La sortie de ce mélangeur est, dans les réémetteurs classiques, reliée à l'entrée d'un amplificateur à fréquence intermédiaire 40 dont la sortie est reliée à la première entrée d'un mélangeur 50 ayant son autre entrée reliée à la sortie d'un oscillateur local 60. Ce mélangeur retranspose le signal en haute fréquence. La sortie du mélangeur 50, à 70 dont la sortie est reliée à l'antenne de réémission 80. Pour la commande de gain de l'amplificateur à fréquence intermédiaire 40, le réémetteur comporte un coupléur 90 prélevant à la sortie de l'equipement une fraction du signal de sortie à partir duquel est établi, par un circuit de commande automatique de gain CAG, 100, un signal d'erreur appliqué à l'entrée de commande automatique de gain de l'amplificateur 40. Suivant le signal de référence retenu pour servir de base a la commande automatique de gain, le circuit 100 détecte l'amplitude crête de la seule composante d'image, ou l'amplitude crête de la somme des composantes, image et son.

Le réémetteur suivant l'invention comporte en plus des éléments classiques sus-décrits, entre la sortie à fréquence intermédiaire du mélangeur 20 et l'entrée de l'amplificateur à fréquence intermédiaire 40, un circuit 1 de commande automatique du rapport image sur son, dit 'CAR' dans la suite de la description.

Il peut aussi comporter, dans un mode de réalisation préféré de l'invention une boucle pour la correction du signal de transmodulation, (cross modulation dans la littérature technique anglo-saxonne). Ce défaut, dô à la non linéarité des amplificateurs, est une modulation du son par l'image qui se traduit sur la composante son, modulée en fréquence, par une modulation d'amplitude résiduelle. Cette boucle comporte un filtre de suivi d'un détecteur d'amplitude 22 dont la sortie est reliée à la première entrée d'un amplificateur différentiel 23. La seconde entrée de cet amplificateur reçoit un signal caractéristique de l'amplitude nominale du signal son, Ref. SON. La sortie de cet amplificateur différentiel fournit un signal d'erreur caractéristique de la transmodulation appliqué à une entrée de correction $E_{CM}$ du circuit CAR, de commande automatique du rapport image/son.

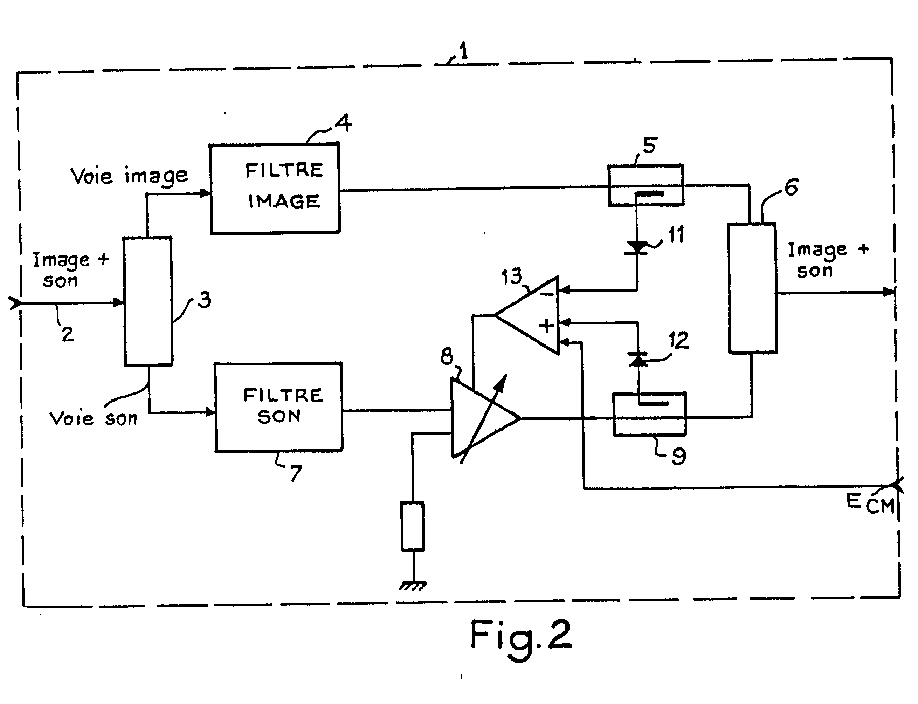

La figure 2 représente en details un mode de réalisation de ce circuit. Son entrée 2 à fréquence intermédiaire reçoit le signal composite du mélangeur 20 (figure 1), les composantes image et son étant superposées. Cette entrée est reliée à l'entrée d'un circuit répartiteur 3, dont les deux sorties forment les entrées de deux voies séparées, dites voie image et voie son, du circuit CAR. Ce répartiteur divise la puissance disponible à son entrée entre les deux voies, les signaux de sortie du répartiteur étant toujours des signaux composites. La voie image comporte un filtre d'image 4 pour la sélection, dans ce signal composite, des seules composantes d'image. La sortie de ce filtre est reliée à l'entrée d'un coupléur 5 dont la sortie principale est reliée à la première entrée d'un circuit sommateur de sortie 6. Le coupléur 5 permet de prélever de la voie image un signal auxiliaire caractéristique de l'amplitude du signal image à fréquence intermédiaire.

La voie son comporte un filtre de son 7, pour la sélection, dans le signal composite présent à son entrée, du signal son à fréquence intermédiaire. La sortie de ce filtre 7 est reliée à l'entrée de signal d'un à l'entrée d'un coupléur 9 dont la sortie principale est reliée à la seconde entrée du circuit sommateur de sortie 6. Le coupléur 9 permet de prélever de la voie son un signal auxiliaire caractéristique de l'amplitude du signal son à fréquence intermédiaire. Les filtres image et son, 4 et 7, doivent avoir des caractéristiques à flancs très raides pour que les signaux transmis ne comportent que les composantes nécessaires, l'atténuation de la composante filtrée étant au moins égale à 40 dB. Les filtres à cellules LC classiques ne permettent d'obtenir ce résultat qu'avec des structures complexes et chères; le circuit CAR utilisé dans les équipements de retransmission suivant l'invention comporterà donc, de préférence, des filtres à ondes de surface.

Les sorties auxiliaires des coupléurs 5 et 9 sont reliées à des diodes de détection de l'amplitude crête des signaux auxiliaires image et son à fréquence intermédiaire, respectivement 11 et 12. Les signaux obtenus à la sortie de ces diodes de détection sont appliques aux entrées d'un amplificateur différentiel 13 dont la sortie est reliée à 1,entrée de commande de gain de l'amplificateur à gain variable 8. L'amplificateur différentiel 13 est tel que lorsque les tensions appliquées sur ses entrées sont dans le rapport prédéfini existant au lieu d'émission, la tension d'erreur appliquée à l'entrée de commande de gain de l'amplificateur 8 est nulle, cette tension d'erreur suivant les variations de ce rapport lorsqu'il s'écarte de la valeur prédéfinie. L'amplificateur à gain variable amplifie plus ou moins la composante de son pour ramener le rapport à cette valeur prédéfinie. Ainsi, le signal à la sortie du sommateur 6 qui recombine les deux composantes, composante image telle que reçue et composante son après correction, présente toujours le même rapport entre les amplitudes crêtes de ces deux composantes. Ce signal peut alors être amplifié en voie commune dans l'amplificateur à fréquence intermédiaire 40; la boucle de commande automatique de gain de cet amplificateur ramène lorsqu'il y a lieu le signal à sa valeur nominale sans modifier le rapport image/son qui conserve la valeur correcte.

Le circuit réalise donc la commande automatique du rapport image/son sans qu'il soit nécessaire de démoduler puis de remoduler le signal reçu à réémettre.

Dans le mode de réalisation de l'équipement comportant une boucle de correction de transmodulation, l'amplificateur différentiel comporte une entrée de commande supplémentaire reliée à l'entrée $E_{CM}$ du circuit CAR à laquelle est appliqué le signal d'erreur caractéristique de la transmodulation. Ce signal d'erreur est combiné, avec une amplitude et un signe convenables, au signal de différence entre les composantes d'image et de son pour réaliser une précorrection de la composante de son complémentaire de la transmodulation détectée à la sortie due aux nonlinéarités des amplificateurs.

Ainsi, le circuit CAR permet simultanément la commande automatique du rapport image/son et la correction de transmodulation affectant les composantes de son, même lorsque le taux de transmodulation est grand. Cet équipement permet en effet de corriger des taux de transmodulation de l'ordre de 20%.

L'invention n'est pas limitée aux modes de réalisation précisément décrits en référence aux figures. En particulier dans un équipement où on ne souhaiterait pas combiner la correction de transmodulation affectant la composante de son à la commande automatique du rapport image/son, il est possible de placer l'amplificateur à gain variable 8 dans la voie image au lieu de le placer dans la voie son comme décrit ci-dessus.

## Revendications

1. Equipement de retransmission de signal de télévision, en voie commune comportant un circuit de commande automatique du rapport des amplitudes crête des composantes image et son du signal de télévision transposé en fréquence intermédiaire, ce circuit comportant deux voies de puissance (3), l'une de ces voies comportant un circuit de filtrage de la composante d'image (4) et l'autre un circuit de filtrage de la composante de son (7), l'une de ces voies comportant en outre un amplificateur à gain variable (8) ayant une entrée de commande, et les sorties de ces deux voies étant reliées aux entrées d'un sommateur de sortie (6), caractérisé en ce que le circuit de commande automatique du rapport image et son comporte en outre a la sortie de chacune des voies des moyens de prélèvement de signal (5, 9) dont les sorties sont reliées à des détecteurs d'amplitude (11, 12), les sorties de ces détecteurs étant reliées aux entrées d'un circuit de comparaison (13) générant un signal de commande lorsque le rapport entre les amplitudes image et son détectées s'écarte d'une valeur nominale prédéfinie, la sortie de ce circuit de comparaison étant couplée à l'entrée de commande de gain de l'amplificateur à gain variable (8).

2. Equipement de retransmission selon la revendication 1, caracvoie son, le circuit de commande automatique du rapport image/son comportant en outre une entrée de correction de transmodulation couplée à l'entrée de commande de l'amplificateur à gain variable, l'équipement comportant en outre une boucle de correction de transmodulation dont reliée à l'entrée de correction qui comporte des moyens de détection de la transmodulation.

3. Equipement de retransmission selon l'une des revendications 1 7) sont des filtres à ondes de surface.

**Patentansprüche**

1. Fernsehsignal-Retransmissionseinrichtung mit gemeinsamem Kanal, versehen mit einer Schaltung zur automatischen Steuerung des Verhältnisses der Spitzenamplituden der Bild- und Tonkomponenten des auf die Zwischenfrequenz umgesetzten Fernsehsignals, wobei diese Schaltung zwei getrennte Wege aufweist, deren Eingänge mit den Ausgängen eines Leistungsverteilers (3) gekoppelt sind, wobei einer dieser Wege eine Filterschaltung zur Filterung der Bildkomponente (4) und der andere eine Filterschaltung zur Filterung der Tonkomponente (7) aufweist, wobei ferner einer dieser Wege zusätzlich einen Verstärker (8) mit variabler Verstärkung umfaßt, der einen Steuereingang aufweist, und wobei die Ausgänge dieser zwei Wege mit den Eingängen eines Ausgangssummierers (6) verbunden sind, dadurch gekennzeichnet, daß die Schaltung zur automatischen Steuerung des Bild/Ton-Verhältnisses ferner am Ausgang jedes der Wege Mittel (5, 9) zum Signalabgreifen aufweist, deren Ausgänge mit Amplitudendetektoren (11, 12) verbunden sind, wobei die Ausgänge dieser Detektoren mit den Eingängen einer Komparatorschaltung (13) verbunden sind, welche ein Steuersignal erzeugt, wenn das Verhältnis zwischen den festgestellten Bild- und Ton-Amplituden von einem vorbestimmten Nennwert abweicht, und wobei der Ausgang dieser Komparatorschaltung an den Verstärkungssteuereingang des Verstärkers (8) mit variabler Verstärkung angeschlossen ist.

2. Retransmissionseinrichtung nach Anspruch 1, dadurch gekennzeichnet, daß der Verstärker (8) mit variabler Verstärkung in den Tonweg eingefügt ist, wobei die Schaltung zur automatischen Steuerung des Bild/TonVerhältnisses ferner einen Kreuzmodulations-Korrektureingang aufweist, der an den Steuereingang des Verstärkers mit variabler Verstärkung angekoppelt ist, wobei die Einrichtung ferner eine Kreuzmodulations-Korrekturschleife umfaßt, deren Eingang mit dem Ausgang der Einrichtung verbunden ist und deren Ausgang mit dem Korrektureingang verbunden ist, an dem Mittel zur Erfassung der Kreuzmodulation vorgesehen sind.

3. Retransmissionseinrichtung nach einem der Ansprüche 1 und 2, dadurch gekennzeichnet, daß die Bild- und Ton-Filterschaltung (4, 7) Überflächenwellenfilter sind.

**Claims**

1. Television signal retransmission equipment with common amplification, comprising a circuit for the automatic control of the ratio of the peak amplitudes of the image and sound components of the television signal transposed to intermediate frequency, this circuit comprising two separate paths the inputs of which are coupled to the outputs of a power divider (3), one of these paths comprising an image component filter circuit (4) and the other a sound component filter circuit (7), one of these paths further comprising a variable gain amplifier (8) having a control input, and the outputs of these two paths being connected to the inputs of an output summer (6), characterized in that the circuit for the automatic control of the image and sound ratio further comprises at the output of each of the paths signal deriving means (5, 9) the outputs of which are connected to amplitude detectors (11, 12), the outputs of these detectors being connected to the inputs of a comparator circuit (13) generating a control signal when the ratio between the detected image and sound amplitudes deviates from a predetermined nominal value, the output of this comparator circuit being coupled to a gain control input of the variable gain amplifier (8).

2. Retransmission equipment according to claim 1, characterized in that the variable gain amplifier (8) is placed into the sound path, the circuit for the automatic control of the image/sound ratio further comprising a cross modulation correction input coupled to the control input of the variable gain amplifier, the equipment further comprising a cross modulation correction loop the input of which is connected to the output of the equipment and the output of which is connected to the correction input which comprises cross modulation detection means.

3. Retransmission equipment according to any of claims 1 and 2, characterized in that the image and sound filter circuits (4,7) are surface wave filters.

# Fig.1

0 081 413

Fig.2